# EUROPEAN PATENT SPECIFICATION

(11) **EP 3 592 064 B1**
(45) Date of publication and mention of the grant of the patent: **15.12.2021**
(21) Application number: 17902077.1
(22) Date of filing: 23.03.2017
(51) Int. Cl.: H04W 72/04, H04L 27/26, H04L 5/00

(54) **WIRELESS COMMUNICATION METHOD AND DEVICE**
DRAHTLOSKOMMUNIKATIONSVERFAHREN UND -VORRICHTUNG
PROCÉDÉ ET DISPOSITIF DE COMMUNICATION SANS FIL

(43) Date of publication of application: 08.01.2020
(73) Proprietor: GUANGDONG OPPO MOBILE TELECOMMUNICATIONS CORP., LTD., Wusha, Chang'an Dongguan, Guangdong 523860 (CN)
(72) Inventor: ZHANG, Zhi, Dongguan Guangdong 523860 (CN); TANG, Hai, Dongguan Guangdong 523860 (CN)
(74) Representative: Manitz Finsterwald Patent- und Rechtsanwaltspartnerschaft mbB
(86) International application number: PCT/CN2017/077940
(87) International publication number: WO 2018/170859

(56) References cited:
- EP-A1- 2 640 140
- EP-A2- 2 418 781
- WO-A1-2011/153286
- WO-A1-2014/126311
- CN-A- 102 017 432
- CN-A- 103 095 631
- CN-A- 104 081 849
- US-A1- 2014 219 237

## Description

### Technical Field

The present application relates to the field of communications, and more particularly, to a wireless communication method and device.

### Background

In a Long Term Evolution (LTE) system, a terminal device can realize a fine synchronization on time-frequency domain based on a Cell-Specific Reference Signal (CRS).

The CRS has characteristics of being sent on a full bandwidth, having a relatively high density in the time-frequency domain and being sent periodically, which results in waste of resources and low flexibility.

However, in a 5th generation (5G) system, resource utilization and flexibility are required to be high, thus the sending of the existing CRS cannot meet requirements of the 5G system.

The documents WO2014/126311, WO2011/153286, US2014/219237 and EP2640140 have disclosed the related art of the present disclosure. WO2014/126311 discloses a method of transmitting a reference signal from a base station to a user equipment in a wireless communication system. WO2011/153286 discloses techniques for allocating resources for use in transmitting reference signals. US2014/219237 discloses establishing a time-frequency reference signal pattern configuration in a carrier extension or a carrier segment, such as CRS or DM RS. EP2640140 discloses a method and an apparatus for determining a relay link resource element group.

### Summary

The invention is defined by the independent claims. Embodiments of the application provide a wireless communication method and device, which can improve utilization rate and flexibility of resources.

The above effect is achieved by a method according to claim 1 or 2 and an apparatus according to claim 13 or 14.

Further improvements and implementations are provided in the dependent claims.

### Brief Description of Drawings

To describe technical solutions of embodiments of the present application more clearly, accompanying drawings that need to be used in the embodiments or description for the existing art will be briefly introduced below. It is apparent that the accompanying drawings described below are only some embodiments of the present application; and for a person of ordinary skill in the art, other drawings may be obtained according to these drawings without creative efforts.
FIG. 1 is a schematic diagram of a wireless communication system according to an embodiment of the present application.
FIG. 2 is a schematic flowchart of a wireless communication method according to an embodiment of the present application.
FIG. 3 is a schematic diagram of a reference signal pattern according to an embodiment of the present application.
FIG. 4 is a schematic diagram of a reference signal pattern according to an embodiment of the present application.
FIG. 5 is a schematic diagram of a reference signal pattern according to an embodiment of the present application.
FIG. 6 is a schematic diagram of a reference signal pattern according to an embodiment of the present application.
FIG. 7 is a schematic diagram of a reference signal pattern according to an embodiment of the present application.
FIG. 8 is a schematic diagram of a reference signal pattern according to an embodiment of the present application.
FIG. 9 is a schematic diagram of a reference signal pattern according to an embodiment of the present application.
FIG. 10 is a schematic flowchart of a wireless communication method according to an embodiment of the present application.
FIG. 11 is a schematic block diagram of a communication device according to an embodiment of the present application.
FIG. 12 is a schematic block diagram of a communication device according to an embodiment of the present application.
FIG. 13 is a schematic block diagram of a system chip according to an embodiment of the present invention.

### Detailed Description

The technical solutions in the embodiments of the present application will be described below with reference to the drawings in embodiments of the present application. It is apparent that the embodiments described are just some embodiments of the present application, and not all embodiments of the present application. All the other embodiments acquired by a person of ordinary skill in the art according to the embodiments of the present application without creative efforts are within the protection scope of the present application.

Embodiments of the invention are those whose scope is within that of the appended claims. Other passages stating embodiments which do not fall under the scope of the appended claims are to be considered as examples.

The technical solutions of the embodiments of the present application may be applied to various communication systems, such as, a Global System of Mobile communication (GSM), a Code Division Multiple Access (CDMA) system, a Wideband Code Division Multiple Access (WCDMA) system, a General Packet Radio Service (GPRS) system, a Long Term Evolution (LTE) system, an LTE Frequency Division Duplex (FDD) system, an LTE Time Division Duplex (TDD) system, a Universal Mobile Telecommunication System (UMTS) system, a Worldwide Interoperability for Microwave Access (WiMAX) communication system or a future 5G system.

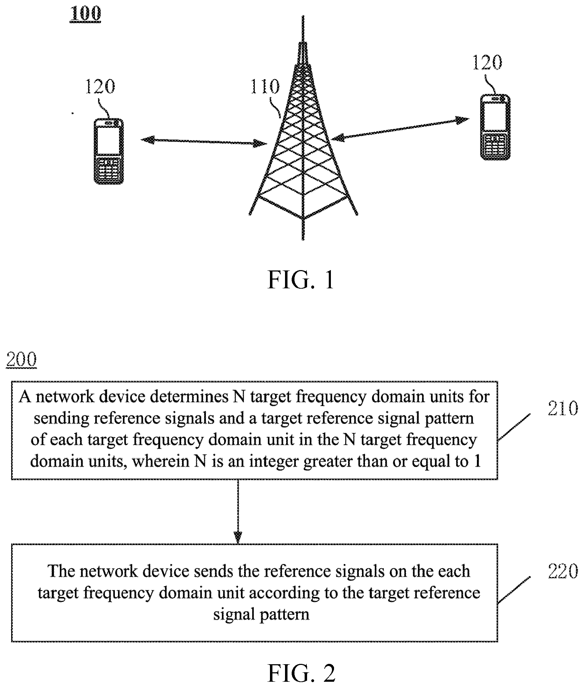

FIG. 1 shows a wireless communication system 100 to which an embodiment of the present application is applied. The wireless communication system 100 may include a network device 110. The network device 110 may be a device that communicates with a terminal device. The network device 110 may provide communication coverage for a specific geographical area, and may communicate with terminal devices (e.g., UE) located within the coverage area. Optionally, the network device 110 may be a Base Transciver Station (BTS) in a GSM system or a CDMA system, a NodeB (NB) in a WCDMA system, an Evolutional Node B (eNB or eNodeB) in an LTE system, or a radio controller in a Cloud Radio Access Network (CRAN). Or the network device may be a relay station, an access point, an on-board device, or a wearable device, a network device in a future 5G network, or a network device in a future evolved Public Land Mobile Network (PLMN), etc.

The wireless communication system 100 also includes at least one terminal device 120 located within a coverage area of the network device 110. The terminal device 120 may be mobile or fixed. Optionally, the terminal device 120 may be referred to an access terminal, a User Equipment (UE), a subscriber unit, a subscriber station, a mobile station, a remote station, a remote terminal, a mobile device, a user terminal, a terminal, a wireless communication device, a user agent, or a user device. The access terminal may be a cellular phone, a cordless phone, a Session Initiation Protocol (SIP) phone, a Wireless Local Loop (WLL) station, a Personal Digital Assistant (PDA), a handheld device with a wireless communication function, a computing device, or other processing device connected to a wireless modem, an on-board device, a wearable device, a terminal device in a future 5G network, or a terminal device in a future evolving Public Land Mobile Network (PLMN), or the like.

Optionally, direct connection (Device to Device, D2D) communication between terminals may be performed between the terminal devices 120.

Optionally, the 5G system or network may also be referred to as a New Radio (NR) system or network.

FIG. 1 exemplifies one network device and two terminal devices. Optionally, the wireless communication system 100 may include multiple network devices, and there may include another quantity of terminal devices within the coverage area of each network device, which is not limited by the embodiments of the present application.

Optionally, the wireless communication system 100 may also include other network entities such as a network controller, a mobile management entity, and embodiments of the present application are not limited thereto.

It should be understood that the terms "system" and "network" are often used interchangeably herein. The term "and/or" in this document is merely an association relationship for describing associated objects, and indicates that there may be three relationships, for example, A and/or B may indicate three situations: A alone, A and B, and B alone. In addition, the symbol "/" in this document generally indicates that objects of the former and the latter connected by "/" has an "or" relationship.

FIG. 2 is a schematic flowchart of a wireless communication method 200 according to an embodiment of the present application. The method 200 may optionally be applied to the system shown in FIG. 1, but is not limited thereto. As shown in FIG. 2, the method 200 includes acts 210-220.

In 210, a network device determines N target frequency domain units for sending reference signals and a target reference signal pattern of each target frequency domain unit in the N target frequency domain units, wherein N is an integer greater than or equal to 1.

Optionally, division of frequency domain units may be performed on all or part of sub-bands of a system.

Optionally, one frequency domain unit may include one or more sub-bands.

Optionally, bandwidths occupied by frequency domain units available in the system may be the same or may be different.

Optionally, the frequency domain unit may be referred to as a block. A size of each frequency domain unit is equal to a size of frequency domain occupied by a certain quantity of Physical Resource Blocks (PRBs).

Optionally, the embodiments of the present application do not limit a size of time domain occupied by each frequency domain unit. For example, time domain occupied by each frequency domain unit may be at least one OFDM symbol, at least one time slot, at least one mini time slot, at least one subframe or at least one radio frame.

The network device determines the N target frequency domain units from at least one frequency domain unit available in a system.

Specifically, the network device determines a quantity N of the target frequency domain units for sending the reference signals according to at least one of: a quantity of terminal devices currently located in the system, a load condition of the system and a service condition of each terminal device in the system. The network device determines the N target frequency domain units from at least one frequency domain unit available in the system.

Optionally, the network device sends a first message, wherein the first message is used for indicating at least one of:
a quantity of frequency domain units available in the system;
a sub-band occupied by each frequency domain unit;
a quantity N of the target frequency domain units; and
a sub-band occupied by each target frequency domain unit.

Optionally, if the first message only carries a part of the above contents, other contents may be specified by a protocol, that is, may be preset in the terminal device and the network device.

Optionally, the first message may be sent periodically or in an event trigger mode except the periodic sending mode.

Optionally, the first message may be a message sent through a Physical Broadcast Channel (PBCH), or System Information (SI), a Radio Resource Control (RRC) message, a Media Access Control (MAC) Control Element (CE), or Downlink Control Information (DCI), or other messages specified in the protocol.

Optionally, a format of the first message may be different for different information contents.

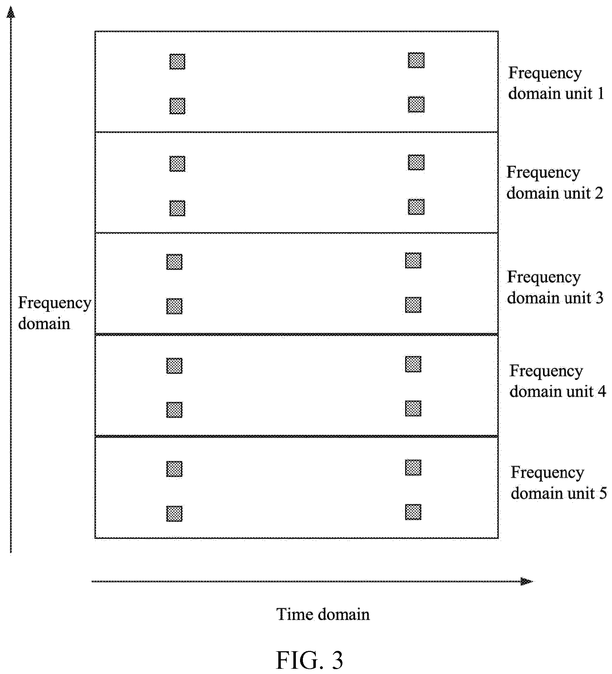

For example, a sending mode of reference signals shown in FIG. 3 may be known to the terminal device through several ways below, wherein a gray square position in the FIG. 3 is a sending position of a reference signal, and in other figures that is similar.

In one way, the network device may inform the terminal device through SI that a size of each frequency domain unit is a size of frequency domain occupied by X PRBs, the current terminal device may see 5 frequency domain units, and each frequency domain unit in the 5 frequency domain units sends reference signals.

In one way, the terminal device and the network device preset a size of each frequency domain unit, for example, the size is a size of frequency domain occupied by X PRBs. The network device may inform through SI that the current terminal device may see 5 frequency domain units, and each frequency domain unit sends the reference signals.

In one way, the network device may inform the terminal device through SI that a size of each frequency domain unit is a size of frequency domain occupied by X PRBs, and the current terminal device may see 5 frequency domain units, and may inform the terminal device through an RRC message that each frequency domain unit in the 5 frequency domain units sends the reference signals.

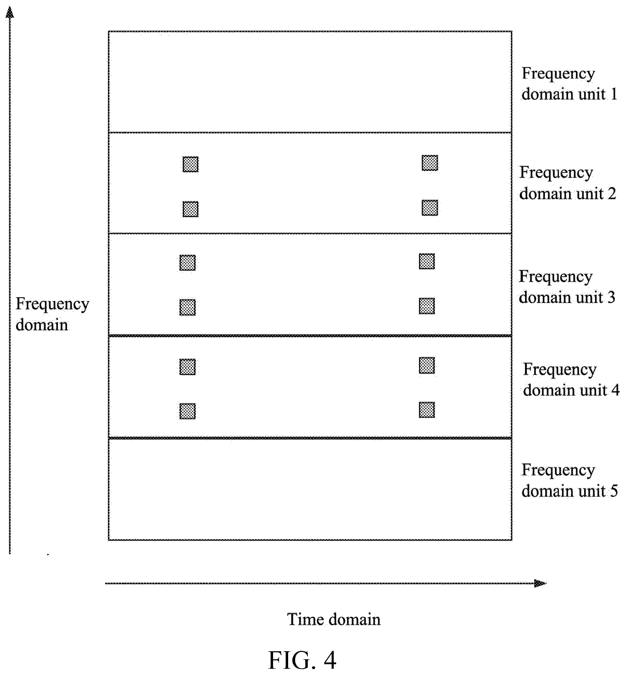

For example, a sending mode of reference signals shown in FIG. 4 may be known to the terminal device through following ways, wherein a gray square position in the FIG. 4 is a sending position of a reference signal.

In one way, the network device may inform the terminal device through SI that a size of each frequency domain unit is a size of frequency domain occupied by X PRBs, the current terminal device may see 5 frequency domain units, and frequency domain units 2, 3 and 4 in the 5 frequency domain units send reference signals.

In one way, the terminal device and the network device preset the size of each frequency domain unit, for example, the size is a size of frequency domain occupied by X PRBs. The network device may inform through SI that the current terminal device may see 5 frequency domain units, and frequency domain units 2, 3 and 4 in the 5 frequency domain units send e reference signals.

In one way, the network device may inform the terminal device through SI that a size of each frequency domain unit is a size of frequency domain occupied by X PRBs, and the current terminal device may see 5 frequency domain units, and terminal device may be informed the through an RRC message that frequency domain units 2, 3 and 4 in the 5 frequency domain units send the reference signals.

The situation shown in FIG. 4 or a similar situation is mainly applied to a situation in which service load of the network is relatively small, the network device may concentrate services on part frequency bands and switch off the signals on other frequency bands as much as possible, thereby power consumption of the network device is reduced, and at the same time, interferences to other cells can be also reduced.

The network device selects a target reference signal pattern corresponding to a first target frequency domain unit in the N target frequency domain units from at least one basic reference signal pattern available in the system, to send reference signals on the first target frequency domain unit according to the target reference signal pattern corresponding to the first target frequency domain unit.

Optionally, the network device sends a fourth message to the terminal device, wherein the fourth message is used for indicating at least one of the following:
a basic reference signal pattern is enabled on the first target frequency domain unit;
a quantity of basic reference signal patterns available in the system;
positions and/or density of reference signals included in basic reference signal patterns available in the system;
a corresponding relationship between basic reference signal patterns available in the system and frequency domain units available in the system; and
information of the target reference signal pattern corresponding to the first target frequency domain unit.

For example, assuming that a quantity of basic reference signal patterns available in the current system is only one, then the fourth message may only indicate that enables the basic reference signal pattern is enabled on the first target frequency domain unit, and the terminal device may receive the reference signals according to the one basic reference signal pattern that is preset.

For example, the fourth message may indicate the corresponding relationship between the basic reference signal patterns available in the system and the frequency domain units available in the system, then on a certain frequency domain unit, the reference signals may be received according to the basic reference signal pattern corresponding to the frequency domain unit. Herein, the fourth message may carry positions and/or density of the reference signals included in the basic reference signal pattern corresponding to each frequency domain unit, or the fourth message may carry a serial number of the basic reference signal pattern corresponding to each frequency domain unit, and the terminal device may preset the positions and/or density of the reference signals included in each of said basic reference signal patterns.

For example, the fourth message may carry the information of the target reference signal pattern corresponding to the first target frequency domain unit, which may be the serial number of the target reference signal pattern, or the positions and/or density of the reference signals included in the target reference signal pattern, then the terminal device may receive the reference signals on the first target frequency domain unit based on the fourth message.

Optionally, the fourth message may be a message sent through a PBCH, or system information, an RRC message, a MAC CE, or DCI, or other messages specified in a protocol.

Optionally, the first target frequency domain unit may be any one of the selected N target frequency domain units.

Optionally, the network device determines that the target reference signal pattern corresponding to the first target frequency domain unit needs to be changed; the network device determines a changed target reference signal pattern corresponding to the first target frequency domain unit; and the network device sends the reference signals on the first target frequency domain unit according to the changed target reference signal pattern.

Optionally, changing the target reference signal pattern corresponding to the first target frequency domain unit may be to change time domain density and/or frequency domain density of the reference signal pattern. Specifically, it may be to increase the time domain density and/or the frequency domain density, or to reduce the time domain density and/or the frequency domain density, or to increase the time domain density and reduce the frequency domain density, or to increase the frequency domain density and reduce the time domain density.

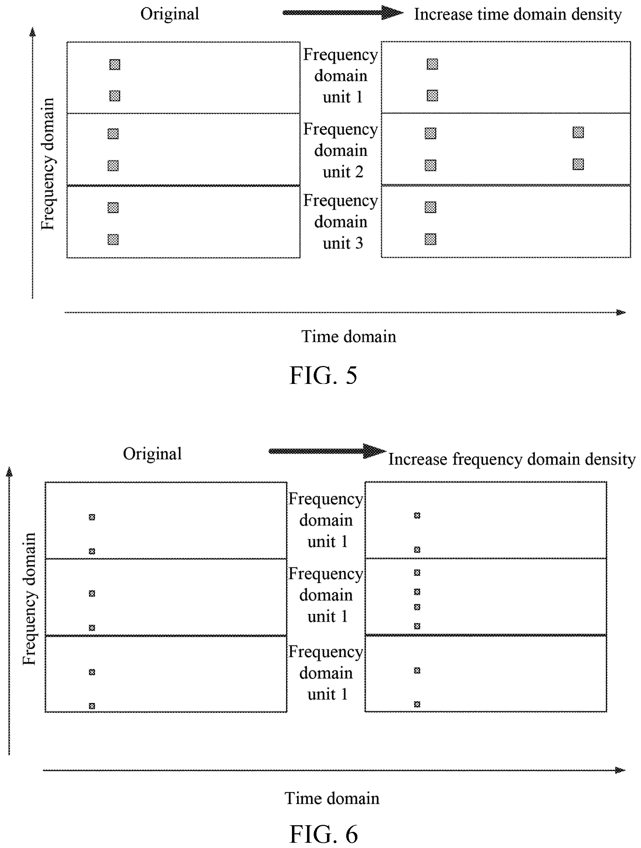

For example, as shown in FIG. 5, assuming that the first target frequency domain unit is a frequency domain unit 2, the time domain density of the time domain unit 2 may be increased.

For example, as shown in FIG. 6, assuming that the first target frequency domain unit is s frequency domain unit 2, the frequency domain density of the time domain unit 2 may be increased.

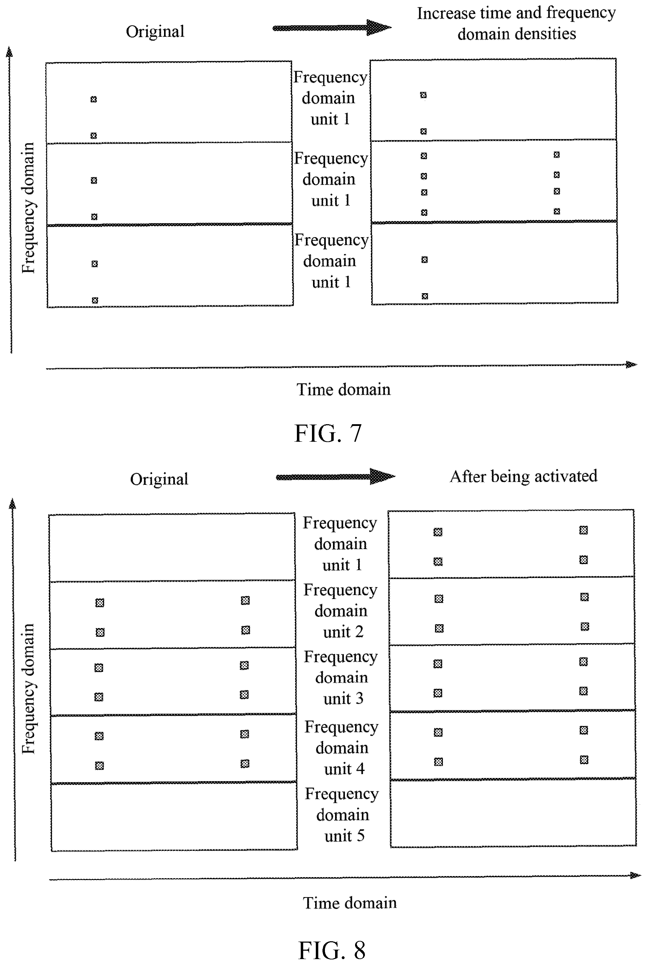

For example, as shown in FIG. 7, assuming that the first target frequency domain unit is the frequency domain unit 2, the frequency domain density and the time domain density of the time domain unit 2 may be increased.

Optionally, the network device may determine a first additional reference signal pattern; and determine the changed target reference signal pattern according to the target reference signal pattern before the change and the first additional reference signal pattern. Herein, the changed target reference signal pattern may be composed of the target reference signal pattern before the change and the first additional reference signal pattern together.

Several ways for determining the first additional reference signal pattern will be introduced below, but it should be understood that embodiments of the present application are not limited thereto.

In an implementation, time domain offset and/or frequency domain offset is performed on at least one position of the reference signals of the target reference signal pattern before the change corresponding to the first target frequency domain unit to obtain the first additional reference signal pattern.

In an implementation, time domain offset and/or frequency domain offset is performed on at least one position of the reference signals of at least one pattern in patterns except the basic reference signal pattern to obtain the first additional reference signal pattern.

In an implementation, the first additional reference signal pattern is determined from multiple additional reference signal patterns.

Optionally, it may be determined that the target reference signal pattern corresponding to the first target frequency domain unit needs to be changed according to a first changing request sent by a terminal device on the first target frequency domain unit.

Specifically, the terminal device on the first target frequency domain unit may determine that the reference signal pattern on the first target frequency domain unit needs to be changed according to a current service requirement, and may send a changing request to the network device. The network device may determine whether the target pattern on the first target frequency domain unit needs to be changed according to the request of the terminal device, and if yes, the changing may be made.

Optionally, the first changing request is used for indicating at least one of following (wherein the indication here represents an expectation of the terminal device):
increasing or decreasing density of reference signals of the target reference signal pattern corresponding to the first target frequency domain unit;
density and/or positions of reference signals of the changed target reference signal pattern corresponding to the first target frequency domain unit;
information of a changed basic reference signal pattern corresponding to the first target frequency domain unit;
time domain offset information and/or frequency domain offset information for performing offset on the target reference signal pattern before the change corresponding to the first target frequency domain unit;
information of an additional reference signal pattern requested to be added;
information of at least one pattern on which time domain and/or frequency domain offset needs to be performed in patterns except the basic reference signal pattern, and/or time domain offset information and/or frequency domain offset information for performing offset on the at least one pattern; and
information of the first target frequency domain unit or a sub-band on which positions and/or density of reference signals needs to be changed in the first target frequency domain unit.

For example, the first changing request is used for requesting to increase or decrease the density of the reference signals of the target reference signal pattern corresponding to the first target frequency domain unit, the network device may increase or decrease the density of the reference signals of the target reference signal pattern, wherein the first changing request may carry a specific increase or decrease value, or may not carry the specific increase or decrease value.

For example, the terminal device may notify the network device of the information of a changed basic reference signal pattern expected by the terminal device through the first changing request, and then the network device may determine whether the basic reference signal pattern corresponding to the first target frequency domain unit needs to be changed in combination with the first changing request. Herein, the first changing request may carry a serial number of the changed basic reference signal pattern, density and/or positions of the reference signals.

Optionally, in an embodiment of the present application, changing the target reference signal pattern corresponding to the first target frequency domain unit may be to only change the basic reference signal pattern without adding an additional reference signal pattern.

Optionally, the network device selects a first basic reference signal pattern from at least one basic reference signal pattern; the network device determines a second additional reference signal pattern; and the network device determines a target reference signal pattern corresponding to a second target frequency domain unit in the N target frequency domain units according to the first basic reference signal pattern and the second additional reference signal pattern, to send the reference signals in the second target frequency domain unit according to the target reference signal pattern corresponding to the second target frequency domain unit.

Several ways for determining the second additional reference signal pattern will be introduced below.

In an implementation, time domain offset and/or frequency domain offset is performed on at least one position of reference signals of the first basic reference signal pattern, to obtain the second additional reference signal pattern by the network device.

In an implementation, time domain offset and/or frequency domain offset is performed on at least one position of reference signals of at least one pattern in patterns except the basic reference signal pattern, so that the network device obtains the second additional reference signal pattern.

In an implementation, the network device determines the second additional reference signal pattern from multiple additional reference signal patterns.

Optionally, the network device sends a fifth message to a terminal device, wherein the fifth message is used for indicating at least one of:
a quantity of basic reference signal patterns available in a system;
positions and/or density of reference signals included in a basic reference signal patterns available in a system;
a corresponding relationship between basic reference signal patterns available in a system and frequency domain units available in the system;
information of a target reference signal pattern corresponding to the second target frequency domain unit;
information of the second additional reference signal pattern, for example, time domain offset information and/or frequency domain offset information of the second additional reference signal compared to the first basic reference signal pattern or other reference signal patterns, or a serial number of the second additional reference signal pattern; and
information of the first basic reference signal pattern, for example, a serial number of the first basic reference signal pattern, or positions and/or density of the reference signals, etc.

Optionally, the fifth message may be a message sent through a PBCH, or system information, an RRC message, a MAC CE, or DCI, or other messages specified in a protocol.

Optionally, the network device determines that the target reference signal pattern corresponding to the second target frequency domain unit needs to be changed; the network device determines a changed target reference signal pattern corresponding to the second target frequency domain unit; and the network device sends the reference signals on the second target frequency domain unit according to the changed target reference signal pattern.

Optionally, the network device determines according to a second changing request of a terminal device on the second target frequency domain unit that the target reference signal pattern corresponding to the second target frequency domain unit needs to be changed.

Optionally, the second changing request is used for indicating at least one of:
increasing or decreasing density of reference signals of the target reference signal pattern corresponding to the second target frequency domain unit;
density and/or positions of the reference signal of the changed target reference signal pattern corresponding to the second target frequency domain unit;
information of a changed basic reference signal pattern corresponding to the second target frequency domain unit;
time domain offset information and/or frequency domain offset information for performing offset on a position of reference signals of the target reference signal pattern before the change corresponding to the second target frequency domain unit;
time domain offset information and/or frequency domain offset information for performing offset on the target reference signal pattern before the change corresponding to the second target frequency domain unit;
information of an additional reference signal pattern requested to be added or replaced;
information of at least one pattern on which time domain and/or frequency domain offset needs to be performed in patterns except the basic reference signal pattern, and/or time domain offset information and/or frequency domain offset information for performing offset on the at least one pattern; and
information of the second target frequency domain unit or a sub-band on which positions and/or a density of the reference signals needs to be changed in the second target frequency domain unit.

Optionally, after the target reference signal pattern of the target frequency domain unit is changed, indication information may be sent to indicate to change a target reference signal pattern of one certain frequency domain unit or change target reference signal patterns of some frequency domain units.

Optionally, in an embodiment of the present application, the network device may determine a frequency domain unit on which a reference signal pattern needs to be changed according to data currently transmitted and/or a time-frequency resource occupied by data.

Optionally, the network device may further determine a sub-band, on which density of reference signals needs to be changed, on the frequency domain unit.

Optionally, the network device may further determine a frequency domain unit, on which a reference signal pattern needs to be changed, on the frequency domain unit according to data currently transmitted and/or a time-frequency resource occupied by data.

Optionally, a quantity of the frequency domain units on which the reference signal pattern is changed each time (e.g., within the same time domain unit) may be one or more.

In 220, the network device sends the reference signals on each of said target frequency domain units according to the target reference signal pattern.

Optionally, before the network device sends the reference signals on the target frequency domain unit according to the target reference signal pattern, the network device schedules a terminal device in a system to the N target frequency domain units.

The network device determines that the quantity of the target frequency domain units for sending the reference signals needs to be changed from N to M, wherein M is a positive integer that is not equal to N; the network device determines M target frequency domain units for sending the reference signals; and the network device sends the reference signals on the M target frequency domain units.

Specifically, the network device determines that the quantity of the target frequency domain units that send the reference signals needs to be changed from N to M according to at least one of: a quantity of terminal devices currently located in the system, a load condition of the system and a service condition of each terminal device in the system. N is smaller than M, and the M target frequency domain units include the N target frequency domain units, and the method further includes: the network device sends a third message, wherein the third message is used for indicating that frequency domain units for sending the reference signals are the M target frequency domain units, or used for indicating M-N target frequency domain units newly added for sending the reference signals in the M target frequency domain units in addition to the N target frequency domain units.

Herein, the Network device activates sending of the reference signals on the frequency domain units newly added.

For example, as shown in FIG. 8, the network device originally used three frequency domain units, namely frequency domain units 2, 3 and 4, to send reference signals. The network device determines that the reference signals needs to be sent on more frequency bands according to factors such as system load, and then the network device may notify the terminal device, through signaling, that a frequency domain unit 1 is newly added for sending the reference signals. Therefore, the terminal device may receive the reference signals on the frequency domain units 1, 2, 3 and 4.

Optionally, N is greater than M, and the network device sends a second message, wherein the second message is used for indicating that frequency domain units for sending the reference signals are the M target frequency domain units, or used for indicating frequency domain units on which sending of the reference signals is stopped in the N target frequency domain units, wherein a quantity of frequency domain units on which sending of the reference signals is stopped is N-M.

Herein, the Network device may deactivate sending of the reference signals on a frequency domain unit.

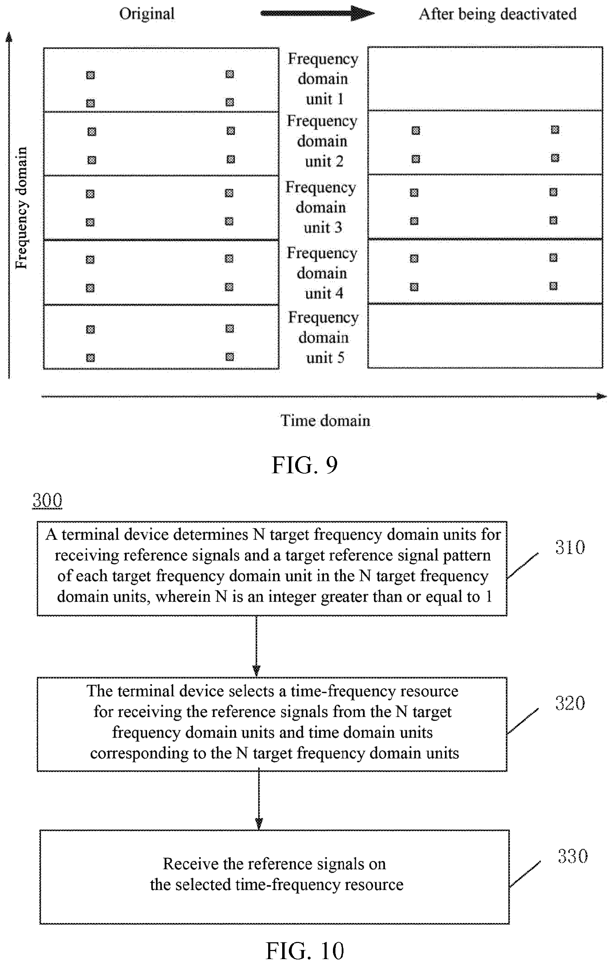

For example, as shown in FIG. 9, the network device originally used five frequency domain units, i.e., frequency domain units 1, 2, 3, 4 and 5, to send the reference signals. The network device determines that the reference signals needs to be sent on smaller frequency bands according to factors such as the system load, and then the network device may notify the terminal device through signaling to stop sending the reference signals on frequency domain units 1 and 5. Therefore, the terminal device may receive the reference signals on the frequency domain units 2, 3 and 4.

Optionally, in an embodiment of the present application, the frequency domain units may be grouped, one group may include at least one frequency domain unit, and the frequency domain units may be activated or deactivated in group.

Optionally, the second message or the third message in an embodiment of the present application may include at least one of: a system message; an RRC message; a MAC CE; and DCI, wherein the DCI may be UE-specific DCI, Common DCI, and UE group-specific DCI.

FIG. 10 is a schematic flowchart of a wireless communication method 300 according to an embodiment of the present application. As shown in FIG. 10, the method 300 includes acts 310-330.

In 310, a terminal device determines N target frequency domain units for receiving reference signals and a target reference signal pattern of each target frequency domain unit in the N target frequency domain units, wherein N is an integer greater than or equal to 1.

In 320, the terminal device selects a time-frequency resource for receiving the reference signals from the N target frequency domain units and time domain units corresponding to the N target frequency domain units.

In 330, the terminal device receives the reference signals on the selected time-frequency resource.

Optionally, the selected time-frequency resource includes in frequency domain all sub-bands for transmitting the reference signals in the N target frequency domain units.

Optionally, the terminal device may select a resource for receiving the reference signals according to data currently transmitted and/or a time-frequency resource occupied by data.

Optionally, the selected time-frequency resource includes in frequency domain all sub-bands for transmitting the reference signal in a part of the N target frequency domain units.

Specifically, the terminal device may select a frequency domain unit that needs to receive the reference signals from N frequency domain units according to data currently transmitted and/or a time-frequency resource occupied by data, and receive the reference signals on a time-frequency resource composed of the selected frequency domain unit and the corresponding time domain unit.

Optionally, the selected time-frequency resource includes in frequency domain a part of sub-bands for transmitting the reference signals in at least one frequency domain unit of the N target frequency domain units.

Specifically, the terminal device may select a frequency domain unit from the N frequency domain units according to data currently transmitted and/or a time-frequency resource occupied by data, select a sub-band from the selected frequency domain unit, and receive the reference signals on a time-frequency resource composed of the selected sub-bands and the corresponding time-domain resource.

Optionally, the terminal device may further select a time-frequency resource for receiving the reference signals according to other ways, which is not specifically limited by the embodiments of the present application.

Optionally, the terminal device receives a first message sent by a network device; wherein the first message is used for indicating at least one of:
a quantity of frequency domain units in a system;
a sub-band occupied by each frequency domain unit;
a quantity N of the target frequency domain units; and
a sub-band occupied by each target frequency domain unit.

The terminal device determines the N target frequency domain units according to the first message, or according to the first message and pre-configured information.

Optionally, the terminal device receives a third message sent by the network device, wherein the third message is used for indicating that frequency domain units for sending the reference signals are the M target frequency domain units, or used for indicating M-N target frequency domain units newly added for sending the reference signals in the M target frequency domain units in addition to the N target frequency domain units; selects a time-frequency resource for receiving the reference signals from the M target frequency domain units and time domain units corresponding to the M target frequency domain units; and receives the reference signals on the time-frequency resource selected from the M target frequency domain units and the corresponding time domain units.

Optionally, the terminal device receives a second message sent by the network device, wherein the second message is used for indicating that frequency domain units for sending the reference signals are the M target frequency domain units, or used for indicating frequency domain units on which sending of the reference signals is stopped in the N target frequency domain units, wherein a quantity of the frequency domain units on which sending of the reference signals is stopped is N-M. The terminal device selects a time-frequency resource for receiving the reference signals from the M target frequency domain units and time domain units corresponding to the M target frequency domain units; and receives the reference signal on the time-frequency resource selected from the M target frequency domain units and the corresponding time domain units.

Optionally, the terminal device receives a fourth message sent by a network device; wherein the fourth message is used for indicating at least one of:
a basic reference signal pattern is enabled on a first target frequency domain unit;
a quantity of basic reference signal patterns available in a system;
positions and/or density of reference signals included in basic reference signal patterns available in a system;
a corresponding relationship between basic reference signal patterns available in a system and frequency domain units available in the system; and
information of a target reference signal pattern corresponding to a first target frequency domain unit.
determining, by the terminal device, the N target frequency domain units for receiving the reference signals and the target reference signal pattern of each of said target frequency domain units in the N target frequency domain units, includes:
   the terminal device determines the target reference signal pattern of a first target frequency domain unit in the N target frequency domain units according to the fourth message, or according to the fourth message and pre-configured information.

Optionally, the method further includes: the terminal device sends a first changing request to a network device, wherein the first changing request is used for changing a target reference signal pattern corresponding to a first target frequency domain unit.

Optionally, the first changing request is used for indicating at least one of:
increasing or decreasing density of reference signals of the target reference signal pattern corresponding to the first target frequency domain unit;
density and/or positions of reference signals of the changed target reference signal pattern corresponding to the first target frequency domain unit;
information of a changed basic reference signal pattern corresponding to the first target frequency domain unit;
time domain offset information and/or frequency domain offset information for performing offset on the target reference signal pattern before the change corresponding to the first target frequency domain unit;
information of an additional reference signal pattern requested to be added; and
information of at least one pattern on which time domain and/or frequency domain offset needs to be performed in patterns except a basic reference signal pattern, and/or time domain offset information and/or frequency domain offset information for performing offset on the at least one pattern.

Optionally, the method further includes: the terminal device receives a fifth message sent by a network device, wherein the fifth message is used for indicating at least one of:
a quantity of basic reference signal patterns available in a system;
positions and/or density of reference signals included in basic reference signal patterns available a system;
a corresponding relationship between basic reference signal patterns available in a system and frequency domain units available in the system;
information of a target reference signal pattern corresponding to a second target frequency domain unit;
information of a second additional reference signal pattern; and
information of a first basic reference signal pattern;
determining, by the terminal device, the N target frequency domain units for receiving the reference signals and the target reference signal pattern of each of said target frequency domain units in the N target frequency domain units, includes: the terminal device determines the target reference signal pattern of the second target frequency domain unit in the N target frequency domain units according to the fifth message, or according to the fifth message and pre-configured information.

Optionally, the method further includes: the terminal device sends a second changing request to the network device, wherein the second changing request is used for changing the target reference signal pattern corresponding to the second target frequency domain unit.

Optionally, the second changing request is used for indicating at least one of:
increasing or decreasing density of reference signals of the target reference signal pattern corresponding to the second target frequency domain unit;
density and/or positions of reference signals of the changed target reference signal pattern corresponding to the second target frequency domain unit;
information of a changed basic reference signal pattern corresponding to the second target frequency domain unit;
time domain offset information and/or frequency domain offset information for performing offset on a position of reference signals of the target reference signal pattern before the change corresponding to the second target frequency domain unit;
time domain offset information and/or frequency domain offset information for performing offset on the target reference signal pattern before the change corresponding to the second target frequency domain unit;
information of an additional reference signal pattern requested to be added or replaced; and
information of at least one pattern on which time domain and/or frequency domain offset needs to be performed in patterns except a basic reference signal pattern, and/or time domain offset information and/or frequency domain offset information for performing offset on the at least one pattern.

Optionally, in an embodiment of the present application, the terminal device UE may apply to the network for changing the positions and/or density of the reference signals of the frequency domain unit where the terminal device UE is located according to its own service type, transmission situation, movement speed, etc.

Optionally, in an embodiment of the present application, the terminal device may perform fine time and frequency synchronization/tracking according to the reference signals.

The requirements and characteristics corresponding to the fine time and frequency synchronization/tracking are as follows.

Frequency domain density of reference signals affects a Power Delay Profile (PDP) extension range of a channel and recognition of multipath. If the frequency domain density is too low, the terminal device can only recognize a multipath with a coarse granularity, and cannot estimate a multipath with a relatively large delay.

The time domain density of the reference signals affects frequency offset estimation and time-varying tracking of the channel. If the time domain density is too low, the terminal device cannot estimate a large frequency spectrum and cannot track time variation of the channel in time.

Different transmission parameters, such as a constellation modulation level and a quantity of transmission layers, have different requirements on the time and frequency synchronization accuracy.

Different terminal devices also have different requirements on the time-frequency density of corresponding reference signals. For example, a terminal device in a high-speed movement at least needs reference signals of high time-domain density to ensure certain time-frequency synchronization accuracy.

In the embodiments of the present application, the sending of the reference signals is performed on demand, which can meet the above-mentioned requirements and characteristics corresponding to the fine time and frequency synchronization.

It should be understood that acts performed by the terminal device in the method 300 may refer to the description in the method 200, and will not be repeated here for the sake of brevity.

Therefore, the network device may determine the N target frequency domain units for sending the reference signals and the target reference signal pattern of each target frequency domain unit in the N target frequency domain units on demand, thereby improving the utilization rate and flexibility of resources.

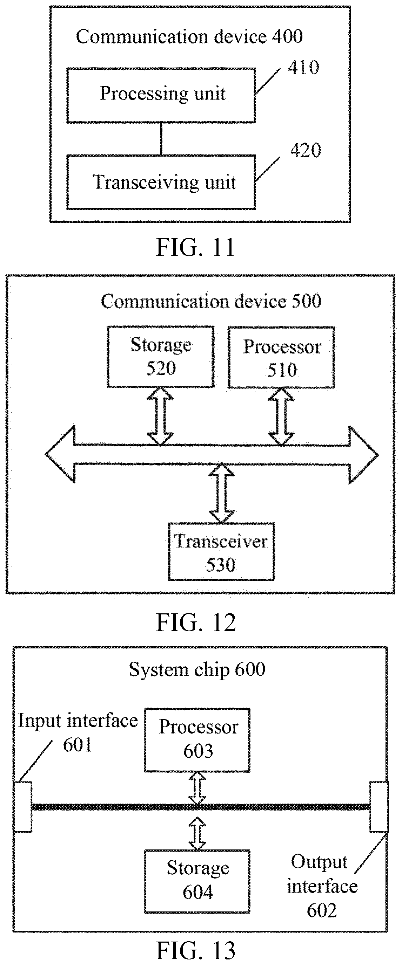

FIG. 11 is a schematic diagram of a communication device 400 according to an embodiment of the present application. As shown in FIG. 11, the communication device 400 includes a processing unit 410 and a transceiving unit 420.

Optionally, various units included in the communication device 400 can implement the corresponding functions implemented by the network device in the wireless communication method shown in FIG. 2, which will not be described repeatedly here for the sake of brevity.

Optionally, various units included in the communication device 400 can implement the corresponding functions implemented by the terminal device in the wireless communication method shown in FIG. 10, which will not be described repeatedly here for the sake of brevity.

FIG. 12 is a schematic block diagram of a communication device 500 according to an embodiment of the present application. As shown in FIG. 12, the communication device 500 includes a processor 510 and a storage 520. The storage 520 may store program codes, and the processor 510 may execute the program codes stored in the storage 520.

Optionally, as shown in FIG. 12, the communication device 500 may include a transceiver 530, and the processor 510 may control the transceiver 530 to communicate with the external.

Optionally, the processor 510 may call the program codes stored in the storage 520 to perform corresponding acts of network device in the method 200 shown in FIG. 2, which will not be described here repeatedly for brevity.

Optionally, the processor 510 may call the program codes stored in the storage 520 to perform corresponding acts of terminal device in the method 300 shown in FIG. 10, which will not be described here repeatedly for brevity.

FIG. 13 is a schematic diagram of structure of a system chip 600 according to an embodiment of the present invention. The system chip 600 of FIG. 13 includes an input interface 601, an output interface 602, a processor 603, and a storage 604, which may be connected through internal communication connection lines. The processor 603 is used for executing codes in the storage 604.

Optionally, when the codes are executed, the processor 603 implements the method implemented by the network device in the method 200 shown in FIG. 2. For the sake of brevity, it will not be repeated here.

Optionally, when the codes are executed, the processor 603 implements the method implemented by the terminal device in the method 300 shown in FIG. 10. For the sake of brevity, it will not be repeated here.

Those of ordinary skill in the art may recognize that various exemplary units and algorithm acts described in the embodiments disclosed herein may be implemented in electronic hardware, or a combination of computer software and electronic hardware. Whether these functions are implemented in hardware or software depends on the specific application and design constraints of the technical solutions. Skilled artisans may use different methods to implement the described functions for each particular application, but such implementation should not be considered to be beyond the scope of the present application.

Those skilled in the art may clearly understand that for convenience and conciseness of description, the specific working processes of the system, device and unit described above may refer to the corresponding processes in the aforementioned method embodiments and will not be described here.

In several embodiments provided by the present application, it should be understood that the disclosed systems, devices and methods may be implemented in other ways. For example, the device embodiments described above are only illustrative, for example, the division of the units is only a logical function division, and there may be other division manners in actual implementation, for example, multiple units or components may be combined or integrated into another system, or some features may be ignored or not executed. On the other hand, the mutual coupling or direct coupling or communication connection shown or discussed may be indirect coupling or communication connection through some interface, device or unit, and may be in electrical, mechanical or other forms.

The units described as separate components may or may not be physically separated, and the component shown as a unit may or may not be a physical unit, i.e., it may be located in one place or may be distributed over multiple network units. Some or all of the units may be selected according to actual needs to achieve the purpose of solutions of the embodiments of the present application.

In addition, various functional units in various embodiments of the present application may be integrated in one processing unit, or the various units may be physically present separately, or two or more units may be integrated in one unit.

The functions may be stored in a computer readable storage medium if the functions implemented in the form of software functional units and sold or used as a separate product. Based on this understanding, the technical solutions of the present application, in essence, or the part contributing to the prior art, or the part of the technical solution, may be embodied in the form of a software product stored in a storage medium, including a variety of instructions for causing a computer device (which may be a personal computer, a server, or a network device) to perform all or part of the acts of the method described in various embodiments of the present application. The aforementioned storage media include a U disk, a mobile hard disk, a read-only memory, a random access memory, a magnetic disk or an optical disk, and other media that is capable of storing program codes.

What are described above are merely exemplary embodiments of the present application, but the protection scope of the present application is not limited thereto.

The invention is solely defined by the appended claims 1-24.

## Claims

1. A wireless communication method, comprising:
determining, by a network device, N frequency domain units for sending reference signals and a reference signal pattern of each frequency domain unit in the N frequency domain units (S210), wherein N is an integer greater than or equal to 1, and wherein a size of each frequency domain unit is equal to a size of frequency domain occupied by a number of Physical Resource Blocks, PRBs; and
sending, by the network device, the reference signals on the each frequency domain unit according to the reference signal pattern (S220),
**characterized by**
determining, by the network device, that a quantity of the frequency domain units for sending the reference signals needs to be changed from N to M,
wherein M is a positive integer that is not equal to N;
determining, by the network device, M frequency domain units for sending the reference signals; and
sending, by the network device, a message to a terminal device, wherein the message is used for indicating that frequency domain units for sending the reference signals are M frequency domain units, or used for indicating M-N frequency domain units newly added for sending the reference signals in the M frequency domain units in addition to the N frequency domain units, wherein M is an integer greater than N,
sending, by the network device, the reference signals on the M target frequency domain units.

2. A wireless communication method, comprising:
determining, by a terminal device, N frequency domain units for receiving reference signals and a reference signal pattern of each frequency domain unit in the N frequency domain units (S310), wherein N is an integer greater than or equal to 1, and wherein a size of each frequency domain unit is equal to a size of frequency domain occupied by a number of Physical Resource Blocks, PRBs;
selecting, by the terminal device, a time-frequency resource for receiving the reference signals from the N frequency domain units and time domain units corresponding to the N frequency domain units (S320); and
receiving, by the terminal device, the reference signals on the selected time-frequency resource (S330),
**characterized by**
receiving, by the terminal device, a message sent by a network device, wherein the message is used for indicating that frequency domain units for sending the reference signals are M frequency domain units, or used for indicating M-N frequency domain units newly added for sending the reference signals in the M frequency domain units in addition to the N frequency domain units, wherein M is an integer greater than N,
receiving, by the terminal device, the reference signals on the M frequency domain units.

3. The method according to claim 2, wherein division of frequency domain units is performed on all or part of sub-bands of a system, and one frequency domain unit includes one or more sub-bands, the selected time-frequency resource comprises all sub-bands in the N frequency domain units in frequency domain, wherein the all sub-bands are for receiving the reference signals.

4. The method according to claim 2, wherein division of frequency domain units is performed on all or part of sub-bands of a system, and one frequency domain unit includes one or more sub-bands, the selected time-frequency resource comprises a part of sub-bands in at least one frequency domain unit of the N frequency domain units in frequency domain, wherein the part of sub-bands are for receiving the reference signals.

5. The method according to any one of claims 2-4, wherein the method further comprises:
receiving, by the terminal device, a first message sent by a network device, wherein the first message is used for indicating at least one of:
a quantity of frequency domain units in a system;
a sub-band occupied by each frequency domain unit;
a quantity N of the frequency domain units; and
a sub-band occupied by each frequency domain unit;
determining, by the terminal device, the N frequency domain units for receiving the reference signals and the reference signal pattern of the each frequency domain unit in the N frequency domain units, comprises:
determining, by the terminal device, the N frequency domain units according to the first message, or according to the first message and pre-configured information.

6. The method according to any one of claims 2-5, wherein the method further comprises:
receiving, by the terminal device, a second message sent by a network device, wherein the second message is used for indicating that frequency domain units for sending the reference signals are M frequency domain units, or used for indicating frequency domain units on which sending of the reference signals is stopped in the N frequency domain units, wherein a quantity of the frequency domain units on which sending of the reference signals is stopped is N-M, wherein N is greater than M;
selecting, by the terminal device, a time-frequency resource for receiving the reference signals from the M frequency domain units and time domain units corresponding to the M frequency domain units; and
receiving, by the terminal device, the reference signals on the time-frequency resource selected from the M frequency domain units and the corresponding time domain units.

7. The method according to claim 2, wherein the method further comprises:
receiving, by the terminal device, a third message sent by a network device, wherein the third message is further used for indicating at least one of:
a reference signal pattern is enabled on a first frequency domain unit;
a quantity of reference signal patterns available in a system;
positions and/or density of reference signals included in reference signal patterns available in a system; and
information of a reference signal pattern corresponding to the first frequency domain unit.

8. The method according to any one of claims 2-7, wherein the method further comprises:
sending, by the terminal device, a first changing request to a network device, wherein the first changing request is used for changing a reference signal pattern corresponding to a first frequency domain unit.

9. The method according to claim 8, wherein the first changing request is used for indicating at least one of:
increasing or decreasing density of reference signals of the reference signal pattern corresponding to the first frequency domain unit;
density and/or positions of reference signals of a changed reference signal pattern corresponding to the first frequency domain unit;
information of a changed reference signal pattern corresponding to the first frequency domain unit;
information of an additional reference signal pattern requested to be added.

10. The method according to claim 2, wherein the method further comprises:
receiving, by the terminal device, a fourth message sent by a network device, wherein the fourth message is used for indicating at least one of:
a quantity of reference signal patterns available in a system;
positions and/or density of reference signals included in reference signal patterns available in a system;
a corresponding relationship between reference signal patterns available in a system and frequency domain units available in the system;
information of a reference signal pattern corresponding to a second frequency domain unit;
information of a second additional reference signal pattern; and
information of a first reference signal pattern.

11. The method according to claim 10, wherein the method further comprises:
sending, by the terminal device, a second changing request to the network device, wherein the second changing request is used for changing the reference signal pattern corresponding to the second frequency domain unit.

12. The method according to claim 11, wherein the second changing request is used for indicating at least one of:
increasing or decreasing density of reference signals of the reference signal pattern corresponding to the second frequency domain unit;
density and/or positions of reference signals of the changed reference signal pattern corresponding to the second frequency domain unit;
information of a changed reference signal pattern corresponding to the second frequency domain unit;
information of an additional reference signal pattern requested to be added or replaced.

13. A network device (400) comprising a processing unit (410) and a transceiving unit (420);
wherein, the processing unit (410) is used for determining N frequency domain units for sending reference signals and a reference signal pattern of each frequency domain unit in the N frequency domain units, wherein N is an integer greater than or equal to 1, and a size of each frequency domain unit is equal to a size of frequency domain occupied by a certain quantity of Physical Resource Blocks, PRBs; and
**characterized in that**,
the transceiving unit (420) is used for sending the reference signals on the each frequency domain unit according to the reference signal pattern; sending a message to a terminal device, wherein the message is used for indicating that frequency domain units for sending the reference signals are M frequency domain units, or used for indicating M-N frequency domain units newly added for sending the reference signals in the M frequency domain units in addition to the N frequency domain units, wherein M is an integer greater than N.

14. A terminal device (400) comprising a processing unit (410) and a transceiving unit (420); wherein,
the processing unit (410) is used for determining N frequency domain units for receiving reference signals and a reference signal pattern of each frequency domain unit in the N frequency domain units, wherein N is an integer greater than or equal to 1, and a size of each frequency domain unit is equal to a size of frequency domain occupied by a certain quantity of Physical Resource Blocks, PRBs; and
selecting a time-frequency resource for receiving the reference signals from the N frequency domain units and time domain units corresponding to the N frequency domain units;
**characterized in that**,
the transceiving unit (420) is used for receiving the reference signals on the selected time-frequency resource; receiving a message sent by a network device, wherein the message is used for indicating that frequency domain units for sending the reference signals are M frequency domain units, or used for indicating M-N frequency domain units newly added for sending the reference signals in the M frequency domain units in addition to the N frequency domain units, wherein M is an integer greater than N.

15. The terminal device according to claim 14, wherein division of frequency domain units is performed on all or part of sub-bands of a system, and one frequency domain unit includes one or more sub-bands, the selected time-frequency resource comprises all sub-bands for receiving the reference signals in the N frequency domain units in frequency domain.

16. The terminal device according to claim 14, wherein division of frequency domain units is performed on all or part of sub-bands of a system, and one frequency domain unit includes one or more sub-bands, the selected time-frequency resource comprises a part of sub-bands for receiving the reference signals in at least one frequency domain unit of the N frequency domain units in frequency domain.

17. The terminal device according to any one of claims 14-16, wherein the transceiving unit (420) is further used for receiving a first message sent by a network device, wherein the first message is used for indicating at least one of:
a quantity of frequency domain units in a system;
a sub-band occupied by each frequency domain unit;
a quantity N of the frequency domain units; and
a sub-band occupied by each frequency domain unit;
the processing unit (410) is further used for:
determining the N frequency domain units according to the first message, or according to the first message and pre-configured information.

18. The terminal device according to any one of claims 14-17, wherein the transceiving unit (420) is further used for receiving a second message sent by a network device, wherein the second message is used for indicating that frequency domain units for sending the reference signals are M frequency domain units, or used for indicating frequency domain units on which sending of the reference signals is stopped in the N frequency domain units;
the processing unit (410) is further used for selecting a time-frequency resource for receiving the reference signals from the M frequency domain units and time domain units corresponding to the M frequency domain units;
the transceiving unit (420) is further used for receiving the reference signals on the time-frequency resource selected from the M frequency domain units and the corresponding time domain units.

19. The terminal device according to claim 14, wherein the transceiving unit (420) is further used for:
receiving a third message sent by a network device; wherein the third message is further used for indicating at least one of:
a reference signal pattern is enabled on the first frequency domain unit;
a quantity of reference signal patterns available in a system;
positions and/or density of reference signals included in reference signal patterns available in a system; and
information of a reference signal pattern corresponding to the first frequency domain unit.

20. The terminal device according to any one of claims 14-19, wherein the transceiving unit (420) is further used for:
sending a first changing request to a network device, wherein the first changing request is used for changing a reference signal pattern corresponding to a first frequency domain unit.

21. The terminal device according to claim 20, wherein the first changing request is used for indicating at least one of:
increasing or decreasing density of reference signals of the reference signal pattern corresponding to the first frequency domain unit;
density and/or positions of reference signals of a changed reference signal pattern corresponding to the first frequency domain unit;
information of a changed reference signal pattern corresponding to the first frequency domain unit;
information of an additional reference signal pattern requested to be added.

22. The terminal device according to any one of claims 14-19, wherein the transceiving unit (420) is further used for receiving a fourth message sent by a network device, wherein the fourth message is used for indicating at least one of:
a quantity of reference signal patterns available in a system;
positions and/or density of reference signals included in reference signal patterns available in s system;
a corresponding relationship between reference signal patterns available in s system and frequency domain units available in the system;
information of a reference signal pattern corresponding to a second frequency domain unit;
information of a second additional reference signal pattern; and
information of a first reference signal pattern.

23. The terminal device according to claim 22, wherein the transceiving unit (420) is further used for:
sending, by the terminal device, a second changing request to the network device, wherein the second changing request is used for changing the reference signal pattern corresponding to the second frequency domain unit.

24. The terminal device according to claim 23, wherein the second changing request is used for indicating at least one of:
increasing or decreasing density of reference signals of the reference signal pattern corresponding to the second frequency domain unit;
density and/or positions of reference signals of the changed reference signal pattern corresponding to the second frequency domain unit;
information of a changed reference signal pattern corresponding to the second frequency domain unit;
information of an additional reference signal pattern requested to be added or replaced.

## Patentansprüche

1. Drahtloskommunikationsverfahren, das umfasst:
Bestimmen, durch eine Netzwerkvorrichtung, von N Frequenzbereichseinheiten zum Senden von Referenzsignalen und eines Referenzsignalmusters jeder Frequenzbereichseinheit in den N Frequenzbereichseinheiten (S210), wobei N eine ganze Zahl größer als oder gleich 1 ist, und wobei eine Größe jeder Frequenzbereichseinheit gleich einer Größe eines Frequenzbereichs ist, der durch eine Zahl von physikalischen Ressourcenblöcken, PRBs, belegt wird; und
Senden, durch die Netzwerkvorrichtung, der Referenzsignale auf der jeweiligen Frequenzbereichseinheit gemäß dem Referenzsignalmuster (S220),
**gekennzeichnet durch**
Bestimmen, durch die Netzwerkvorrichtung, dass eine Anzahl von Frequenzbereichseinheiten zum Senden der Referenzsignale von N zu M geändert werden muss, wobei M eine positive ganze Zahl ist, die nicht gleich N ist; Bestimmen, durch die Netzwerkvorrichtung, von M Frequenzbereichseinheiten zum Senden der Referenzsignale; und Senden, durch die Netzwerkvorrichtung, einer Nachricht an eine Endgerätvorrichtung, wobei die Nachricht verwendet wird, um anzuzeigen, dass Frequenzbereichseinheiten zum Senden der Referenzsignale M Frequenzbereichseinheiten sind, oder verwendet wird, um M-N Frequenzbereichseinheiten anzuzeigen, die zum Senden der Referenzsignale in den M Frequenzbereichseinheiten zusätzlich zu den N Frequenzbereichseinheiten neu hinzugefügt wurden, wobei M eine ganze Zahl größer als N ist; Senden, durch die Netzwerkvorrichtung, der Referenzsignale auf den M Zielfrequenzbereichseinheiten.

2. Drahtloskommunikationsverfahren, das umfasst:
Bestimmen, durch eine Endgerätvorrichtung, von N Frequenzbereichseinheiten zum Empfangen von Referenzsignalen und eines Referenzsignalmusters jeder Frequenzbereichseinheit in den N Frequenzbereichseinheiten (S310), wobei N eine ganze Zahl größer als oder gleich 1 ist, und wobei eine Größe jeder Frequenzbereichseinheit gleich einer Größe eines Frequenzbereichs ist, der durch eine Zahl von physikalischen Ressourcenblöcken, PRBs, belegt wird;
Auswählen, durch die Endgerätvorrichtung, einer Zeit-Frequenz-Ressource zum Empfangen der Referenzsignale von den N Frequenzbereichseinheiten und Zeitbereichseinheiten, die den N Frequenzbereichseinheiten entsprechen (S320); und
Empfangen, durch die Endgerätvorrichtung, der Referenzsignale auf der ausgewählten Zeit-Frequenz-Ressource (S330),
**gekennzeichnet durch**
Empfangen, durch die Endgerätvorrichtung, einer durch eine Netzwerkvorrichtung gesendeten Nachricht, wobei die Nachricht verwendet wird, um anzuzeigen, dass Frequenzbereichseinheiten zum Senden der Referenzsignale M Frequenzbereichseinheiten sind, oder verwendet wird, um M-N Frequenzbereichseinheiten anzuzeigen, die zum Senden der Referenzsignale in den M Frequenzbereichseinheiten zusätzlich zu den N Frequenzbereichseinheiten neu hinzugefügt wurden, wobei M eine ganze Zahl größer als N ist, Empfangen, durch die Endgerätvorrichtung, der Referenzsignale auf den M Frequenzbereichseinheiten.

3. Verfahren nach Anspruch 2, wobei eine Teilung von Frequenzbereichseinheiten auf allen oder einem Teil von Teilbändern eines Systems durchgeführt wird, und eine Frequenzbereichseinheit ein oder mehrere Teilbänder umfasst, wobei die ausgewählte Zeit-Frequenz-Ressource alle Teilbänder in den N Frequenzbereichseinheiten in einem Frequenzbereich umfasst, wobei alle die Teilbänder zum Empfangen der Referenzsignale dienen.

4. Verfahren nach Anspruch 2, wobei eine Teilung von Frequenzbereichseinheiten auf allen oder einem Teil von Teilbändern eines Systems durchgeführt wird, und eine Frequenzbereichseinheit ein oder mehrere Teilbänder umfasst, wobei die ausgewählte Zeit-Frequenz-Ressource einen Teil von Teilbändern in mindestens einer Frequenzbereichseinheit der N Frequenzbereichseinheiten in einem Frequenzbereich umfasst, wobei der Teil von Teilbändern zum Empfangen der Referenzsignale dient.

5. Verfahren nach einem der Ansprüche 2-4, wobei das Verfahren ferner umfasst:
Empfangen, durch die Endgerätvorrichtung, einer durch eine Netzwerkvorrichtung gesendeten ersten Nachricht, wobei die erste Nachricht verwendet wird, um mindestens eines von Folgendem anzuzeigen:
eine Anzahl von Frequenzbereichseinheiten in einem System;
ein Teilband, das durch jede Frequenzbereichseinheit belegt wird;
eine Anzahl N der Frequenzbereichseinheiten; und
ein Teilband, das durch jede Frequenzbereichseinheit belegt wird;
wobei das Bestimmen, durch die Endgerätvorrichtung, der N Frequenzbereichseinheiten zum Empfangen der Referenzsignale und des Referenzsignalmusters der jeweiligen Frequenzbereichseinheit in den N Frequenzbereichseinheiten umfasst:
Bestimmen, durch die Endgerätvorrichtung, der N Frequenzbereichseinheiten gemäß der ersten Nachricht oder gemäß der ersten Nachricht und vorkonfigurierter Information.

6. Verfahren nach einem der Ansprüche 2-5, wobei das Verfahren ferner umfasst:
Empfangen, durch die Endgerätvorrichtung, einer durch eine Netzwerkvorrichtung gesendeten zweiten Nachricht, wobei die zweite Nachricht verwendet wird, um anzuzeigen, dass Frequenzbereichseinheiten zum Senden der Referenzsignale M Frequenzbereichseinheiten sind, oder verwendet wird, um Frequenzbereichseinheiten anzuzeigen, auf denen das Senden der Referenzsignale in den N Frequenzbereichseinheiten gestoppt wird, wobei eine Anzahl der Frequenzbereichseinheiten, auf denen das Senden der Referenzsignale gestoppt wird, N-M ist, wobei N größer als M ist;
Auswählen, durch die Endgerätvorrichtung, einer Zeit-Frequenz-Ressource zum Empfangen der Referenzsignale von den M Frequenzbereichseinheiten und Zeitbereichseinheiten, die den M Frequenzbereichseinheiten entsprechen; und
Empfangen, durch die Endgerätvorrichtung, der Referenzsignale auf der Zeit-Frequenz-Ressource, die aus den M Frequenzbereichseinheiten und den entsprechenden Zeitbereichseinheiten ausgewählt wurde.

7. Verfahren nach Anspruch 2, wobei das Verfahren ferner umfasst:
Empfangen, durch die Endgerätvorrichtung, einer durch eine Netzwerkvorrichtung gesendeten dritten Nachricht, wobei die dritte Nachricht ferner verwendet wird, um mindestens eines von Folgendem anzuzeigen:
ein Referenzsignalmuster ist auf einer ersten Frequenzbereichseinheit aktiviert;
eine Anzahl von Referenzsignalmustern, die in einem System verfügbar ist;
Positionen und/oder Dichte von Referenzsignalen, die in Referenzsignalmustern enthalten sind, die in einem System verfügbar sind; und
Information über ein Referenzsignalmuster, das der ersten Frequenzbereichseinheit entspricht.

8. Verfahren nach einem der Ansprüche 2-7, wobei das Verfahren ferner umfasst:
Senden, durch die Endgerätvorrichtung, einer ersten Änderungsanforderung an eine Netzwerkvorrichtung, wobei die erste Änderungsanforderung verwendet wird, um ein Referenzsignalmuster, das einer ersten Frequenzbereichseinheit entspricht, zu ändern.

9. Verfahren nach Anspruch 8, wobei die erste Änderungsanforderung verwendet wird, um mindestens eines von Folgendem anzuzeigen:
Erhöhen oder Verringern einer Dichte von Referenzsignalen des Referenzsignalmusters, das der ersten Frequenzbereichseinheit entspricht;
Dichte und/oder Positionen von Referenzsignalen eines geänderten Referenzsignalmusters, das der ersten Frequenzbereichseinheit entspricht;
Information über ein geändertes Referenzsignalmuster, das der ersten Frequenzbereichseinheit entspricht;
Information über ein zusätzliches Referenzsignalmuster, dessen Hinzufügen angefordert wurde.

10. Verfahren nach Anspruch 2, wobei das Verfahren ferner umfasst:
Empfangen, durch die Endgerätvorrichtung, einer durch eine Netzwerkvorrichtung gesendeten vierten Nachricht, wobei die vierte Nachricht verwendet wird, um mindestens eines von Folgendem anzuzeigen:
eine Anzahl von Referenzsignalmustern, die in einem System verfügbar sind;
Positionen und/oder Dichte von Referenzsignalen, die in Referenzsignalmustern enthalten sind, die in einem System verfügbar sind;
eine entsprechende Beziehung zwischen Referenzsignalmustern, die in einem System verfügbar sind, und Frequenzbereichseinheiten, die in dem System verfügbar sind;
Information über ein Referenzsignalmuster, das einer zweiten Frequenzbereichseinheit entspricht;
Information über ein zweites zusätzliches Referenzsignalmuster; und
Information über ein erstes Referenzsignalmuster.

11. Verfahren nach Anspruch 10, wobei das Verfahren ferner umfasst:
Senden, durch die Endgerätvorrichtung, einer zweiten Änderungsanforderung an die Netzwerkvorrichtung, wobei die zweite Änderungsanforderung verwendet wird, um das Referenzsignalmuster, das der zweiten Frequenzbereichseinheit entspricht, zu ändern.

12. Verfahren nach Anspruch 11, wobei die zweite Änderungsanforderung verwendet wird, um mindestens eines von Folgendem anzuzeigen:
Erhöhen oder Verringern einer Dichte von Referenzsignalen des Referenzsignalmusters, das der zweiten Frequenzbereichseinheit entspricht;
Dichte und/oder Positionen von Referenzsignalen des geänderten Referenzsignalmusters, das der zweiten Frequenzbereichseinheit entspricht;
Information über ein geändertes Referenzsignalmuster, das der zweiten Frequenzbereichseinheit entspricht;
Information über ein zusätzliches Referenzsignalmuster, dessen Hinzufügen oder Ersetzen angefordert wurde.

13. Netzwerkvorrichtung (400), die eine Verarbeitungseinheit (410) und eine Sendeempfangseinheit (420) umfasst;
wobei die Verarbeitungseinheit (410) zum Bestimmen von N Frequenzbereichseinheiten zum Senden von Referenzsignalen und eines Referenzsignalmusters jeder Frequenzbereichseinheit in den N Frequenzbereichseinheiten verwendet wird, wobei N eine ganze Zahl größer als oder gleich 1 ist, und eine Größe jeder Frequenzbereichseinheit gleich einer Größe eines Frequenzbereichs ist, der durch eine gewisse Anzahl von physikalischen Ressourcenblöcken, PRBs, belegt wird; und
**dadurch gekennzeichnet, dass**
die Sendeempfangseinheit (420) verwendet wird zum Senden der Referenzsignale auf der jeweiligen Frequenzbereichseinheit gemäß dem Referenzsignalmuster; Senden einer Nachricht an eine Endgerätvorrichtung, wobei die Nachricht verwendet wird, um anzuzeigen, dass Frequenzbereichseinheiten zum Senden der Referenzsignale M Frequenzbereichseinheiten sind, oder verwendet wird, um M-N Frequenzbereichseinheiten anzuzeigen, die zum Senden der Referenzsignale in den M Frequenzbereichseinheiten zusätzlich zu den N Frequenzbereichseinheiten neu hinzugefügt wurden, wobei M eine ganze Zahl größer als N ist.

14. Endgerätvorrichtung (400), die eine Verarbeitungseinheit (410) und eine Sendeempfangseinheit (420) umfasst; wobei
die Verarbeitungseinheit (410) verwendet wird zum Bestimmen von N Frequenzbereichseinheiten zum Empfangen von Referenzsignalen und eines Referenzsignalmusters jeder Frequenzbereichseinheit in den N Frequenzbereichseinheiten, wobei N eine ganze Zahl größer als oder gleich 1 ist, und wobei eine Größe jeder Frequenzbereichseinheit gleich einer Größe eines Frequenzbereichs ist, der durch eine gewisse Anzahl von physikalischen Ressourcenblöcken, PRBs, belegt wird; und
Auswählen einer Zeit-Frequenz-Ressource zum Empfangen der Referenzsignale von den N Frequenzbereichseinheiten und Zeitbereichseinheiten, die den N Frequenzbereichseinheiten entsprechen;
**dadurch gekennzeichnet, dass**
die Sendeempfangseinheit (420) verwendet wird zum Empfangen der Referenzsignale auf der ausgewählten Zeit-Frequenz-Ressource; Empfangen einer durch eine Netzwerkvorrichtung gesendeten Nachricht, wobei die Nachricht verwendet wird, um anzuzeigen, dass Frequenzbereichseinheiten zum Senden der Referenzsignale M Frequenzbereichseinheiten sind, oder verwendet wird, um M-N Frequenzbereichseinheiten anzuzeigen, die zum Senden der Referenzsignale in den M Frequenzbereichseinheiten zusätzlich zu den N Frequenzbereichseinheiten neu hinzugefügt wurden, wobei M eine ganze Zahl größer als N ist.

15. Endgerätvorrichtung nach Anspruch 14, wobei eine Teilung von Frequenzbereichseinheiten auf allen oder einem Teil von Teilbändern eines Systems durchgeführt wird, und eine Frequenzbereichseinheit ein oder mehrere Teilbänder umfasst, wobei die ausgewählte Zeit-Frequenz-Ressource alle Teilbänder zum Empfangen der Referenzsignale in den N Frequenzbereichseinheiten in einem Frequenzbereich umfasst.

16. Endgerätvorrichtung nach Anspruch 14, wobei eine Teilung von Frequenzbereichseinheiten auf allen oder einem Teil von Teilbändern eines Systems durchgeführt wird, und eine Frequenzbereichseinheit ein oder mehrere Teilbänder umfasst, wobei die ausgewählte Zeit-Frequenz-Ressource einen Teil von Teilbändern zum Empfangen der Referenzsignale in mindestens einer Frequenzbereichseinheit der N Frequenzbereichseinheiten in einem Frequenzbereich umfasst.

17. Endgerätvorrichtung nach einem der Ansprüche 14-16, wobei die Sendeempfangseinheit (420) ferner verwendet wird zum Empfangen einer durch eine Netzwerkvorrichtung gesendeten ersten Nachricht, wobei die erste Nachricht verwendet wird, um mindestens eines von Folgendem anzuzeigen:
eine Anzahl von Frequenzbereichseinheiten in einem System;
ein Teilband, das durch jede Frequenzbereichseinheit belegt wird;
eine Anzahl N der Frequenzbereichseinheiten; und
ein Teilband, das durch jede Frequenzbereichseinheit belegt wird;
wobei die Verarbeitungseinheit (410) ferner zu Folgendem verwendet wird:
Bestimmen der N Frequenzbereichseinheiten gemäß der ersten Nachricht oder gemäß der ersten Nachricht und vorkonfigurierter Information.

18. Endgerätvorrichtung nach einem der Ansprüche 14-17, wobei die Sendeempfangseinheit (420) ferner verwendet wird zum Empfangen einer durch eine Netzwerkvorrichtung gesendeten zweiten Nachricht, wobei die zweite Nachricht verwendet wird, um anzuzeigen, dass Frequenzbereichseinheiten zum Senden der Referenzsignale M Frequenzbereichseinheiten sind, oder verwendet wird, um Frequenzbereichseinheiten anzuzeigen, auf denen das Senden der Referenzsignale in den N Frequenzbereichseinheiten gestoppt wird;
wobei die Verarbeitungseinheit (410) ferner verwendet wird zum Auswählen einer Zeit-Frequenz-Ressource zum Empfangen der Referenzsignale von den M Frequenzbereichseinheiten und Zeitbereichseinheiten, die den M Frequenzbereichseinheiten entsprechen;
wobei die Sendeempfangseinheit (420) ferner verwendet wird zum Empfangen der Referenzsignale auf der Zeit-Frequenz-Ressource, die aus den M Frequenzbereichseinheiten und den entsprechenden Zeitbereichseinheiten ausgewählt wurde.

19. Endgerätvorrichtung nach Anspruch 14, wobei die Sendeempfangseinheit (420) ferner zu Folgendem verwendet wird:
Empfangen einer durch eine Netzwerkvorrichtung gesendeten dritten Nachricht; wobei die dritte Nachricht ferner verwendet wird, um mindestens eines von Folgendem anzuzeigen:
ein Referenzsignalmuster ist auf der ersten Frequenzbereichseinheit aktiviert;
eine Anzahl von Referenzsignalmustern, die in einem System verfügbar sind;
Positionen und/oder Dichte von Referenzsignalen, die in Referenzsignalmustern enthalten sind, die in einem System verfügbar sind; und
Information über ein Referenzsignalmuster, das der ersten Frequenzbereichseinheit entspricht.

20. Endgerätvorrichtung nach einem der Ansprüche 14-19, wobei die Sendeempfangseinheit (420) ferner zu Folgendem verwendet wird:
Senden einer ersten Änderungsanforderung an eine Netzwerkvorrichtung, wobei die erste Änderungsanforderung verwendet wird, um ein Referenzsignalmuster, das einer ersten Frequenzbereichseinheit entspricht, zu ändern.

21. Endgerätvorrichtung nach Anspruch 20, wobei die erste Änderungsanforderung verwendet wird, um mindestens eines von Folgendem anzuzeigen:
Erhöhen oder Verringern einer Dichte von Referenzsignalen des Referenzsignalmusters, das der ersten Frequenzbereichseinheit entspricht;
Dichte und/oder Positionen von Referenzsignalen eines geänderten Referenzsignalmusters, das der ersten Frequenzbereichseinheit entspricht;
Information über ein geändertes Referenzsignalmuster, das der ersten Frequenzbereichseinheit entspricht;
Information über ein zusätzliches Referenzsignalmuster, dessen Hinzufügen angefordert wurde.

22. Endgerätvorrichtung nach einem der Ansprüche 14-19, wobei die Sendeempfangseinheit (420) ferner verwendet wird zum Empfangen einer durch eine Netzwerkvorrichtung gesendeten vierten Nachricht, wobei die vierte Nachricht verwendet wird, um mindestens eines von Folgendem anzuzeigen:
eine Anzahl von Referenzsignalmustern, die in einem System verfügbar sind;
Positionen und/oder Dichte von Referenzsignalen, die in Referenzsignalmustern enthalten sind, die in einem System verfügbar sind;
eine entsprechende Beziehung zwischen Referenzsignalmustern, die in einem System verfügbar sind, und Frequenzbereichseinheiten, die in dem System verfügbar sind;
Information über ein Referenzsignalmuster, das einer zweiten Frequenzbereichseinheit entspricht;
Information über ein zweites zusätzliches Referenzsignalmuster; und
Information über ein erstes Referenzsignalmuster.

23. Endgerätvorrichtung nach Anspruch 22, wobei die Sendeempfangseinheit (420) ferner zu Folgendem verwendet wird:
Senden, durch die Endgerätvorrichtung, einer zweiten Änderungsanforderung an die Netzwerkvorrichtung, wobei die zweite Änderungsanforderung verwendet wird, um das Referenzsignalmuster, das der zweiten Frequenzbereichseinheit entspricht, zu ändern.

24. Endgerätvorrichtung nach Anspruch 23, wobei die zweite Änderungsanforderung verwendet wird, um mindestens eines von Folgendem anzuzeigen:
Erhöhen oder Verringern einer Dichte von Referenzsignalen des Referenzsignalmusters, das der zweiten Frequenzbereichseinheit entspricht;
Dichte und/oder Positionen von Referenzsignalen des geänderten Referenzsignalmusters, das der zweiten Frequenzbereichseinheit entspricht;
Information über ein geändertes Referenzsignalmuster, das der zweiten Frequenzbereichseinheit entspricht;
Information über ein zusätzliches Referenzsignalmuster, dessen Hinzufügen oder Ersetzen angefordert wurde.

## Revendications

1. Procédé de communication sans fil, comprenant :
la détermination, par un dispositif de réseau, de N unités de domaine de fréquence pour envoyer des signaux de référence et d'un motif de signal de référence de chaque unité de domaine de fréquence dans les N unités de domaine de fréquence (S210), N étant un nombre entier supérieur ou égal à 1, et une taille de chaque unité de domaine de fréquence étant égale à une taille de domaine de fréquence occupée par un nombre de blocs de ressources physiques, PRB ; et
l'envoi, par le dispositif de réseau, des signaux de référence sur chaque unité de domaine de fréquence en fonction du motif de signal de référence (S220),
**caractérisé par**
la détermination, par le dispositif de réseau, qu'une quantité des unités de domaine de fréquence pour envoyer des signaux de référence doit être changée de N à M, M étant un entier positif qui n'est pas égal à N ;
la détermination, par le dispositif de réseau, de M unités de domaine de fréquence pour envoyer les signaux de référence ; et
l'envoi, par le dispositif de réseau, d'un message à un dispositif terminal, le message étant utilisé pour indiquer que des unités de domaine de fréquence pour envoyer les signaux de référence sont M unités de domaine de fréquence, ou utilisé pour indiquer M-N unités de domaine de fréquence nouvellement ajoutées pour envoyer les signaux de référence dans les M unités de domaine de fréquence en plus des N unités de domaine de fréquence, M étant un nombre entier supérieur à N,
l'envoi, par le dispositif de réseau, des signaux de référence sur les M unités de domaine de fréquence cibles.

2. Procédé de communication sans fil, comprenant :
la détermination, par un dispositif terminal, de N unités de domaine de fréquence destinées à recevoir des signaux de référence et d'un motif de signal de référence de chaque unité de domaine de fréquence dans les N unités de domaine de fréquence (S310), N étant un entier supérieur ou égal à 1, et une taille de chaque unité de domaine de fréquence étant égale à une taille de domaine de fréquence occupée par un nombre de blocs de ressources physiques, PRB ;
la sélection, par le dispositif terminal, d'une ressource temps-fréquence destinée à recevoir les signaux de référence provenant des N unités de domaine de fréquence et des unités de domaine de temps correspondant aux N unités de domaine de fréquence (S320) ; et
la réception, par le dispositif terminal, des signaux de référence sur la ressource temps-fréquence sélectionnée (S330),
**caractérisé par**
la réception, par le dispositif terminal, d'un message envoyé par un dispositif de réseau, le message étant utilisé pour indiquer que des unités de domaine de fréquence pour envoyer les signaux de référence sont M unités de domaine de fréquence, ou utilisé pour indiquer M-N unités de domaine de fréquence nouvellement ajoutées pour envoyer les signaux de référence dans les M unités de domaine de fréquence en plus des N unités de domaine de fréquence, M étant un nombre entier supérieur à N,
la réception, par le dispositif terminal, des signaux de référence sur les M unités de domaine de fréquence.

3. Procédé selon la revendication 2, une division des unités de domaine de fréquence étant réalisée sur toutes ou une partie des sous-bandes d'un système, et une unité de domaine de fréquence comprenant une ou plusieurs sous-bandes, la ressource temps-fréquence sélectionnée comprenant toutes les sous-bandes dans les N unités de domaine de fréquence dans le domaine de fréquence, toutes les sous-bandes étant destinées à recevoir les signaux de référence.

4. Procédé selon la revendication 2, une division d'unités de domaine de fréquence étant réalisée sur toutes ou une partie des sous-bandes d'un système, et une unité du domaine de fréquence comprenant une ou plusieurs sous-bandes, la ressource temps-fréquence sélectionnée comprenant une partie des sous-bandes dans au moins une unité du domaine de fréquence des N unités de domaine de fréquence dans le domaine de fréquence, la partie des sous-bandes étant destinée à recevoir les signaux de référence.

5. Procédé selon l'une quelconque des revendications 2 à 4, le procédé comprenant en outre :
la réception, par le dispositif terminal, d'un premier message envoyé par un dispositif de réseau, le premier message étant utilisé pour indiquer au moins l'une parmi :
une quantité d'unités de domaine de fréquence dans un système ;
une sous-bande occupée par chaque unité de domaine de fréquence ;
une quantité N d'unités de domaine de fréquence ; et
une sous-bande occupée par chaque unité de domaine de fréquence ;
la détermination, par le dispositif terminal, des N unités de domaine de fréquence destinées à recevoir les signaux de référence et le motif de signal de référence de chaque unité de domaine de fréquence dans les N unités de domaine de fréquence, comprenant :
la détermination, par le dispositif terminal, des N unités de domaine de fréquence en fonction du premier message, ou en fonction du premier message et d'informations préconfigurées.

6. Procédé selon l'une quelconque des revendications 2 à 5, le procédé comprenant en outre :
la réception, par le dispositif terminal, d'un deuxième message envoyé par un dispositif de réseau, le deuxième message étant utilisé pour indiquer que des unités de domaine de fréquence pour l'envoi des signaux de référence sont M unités de domaine de fréquence, ou utilisé pour indiquer des unités de domaine de fréquence sur lesquelles l'envoi des signaux de référence est arrêté dans les N unités de domaine de fréquence, une quantité des unités de domaine de fréquence sur lesquelles l'envoi des signaux de référence est arrêté étant N-M, N étant supérieur à M ;
la sélection, par le dispositif terminal, d'une ressource temps-fréquence pour recevoir les signaux de référence à partir des M unités de domaine de fréquence et des unités de domaine de temps correspondant aux M unités de domaine de fréquence ; et
la réception, par le dispositif terminal, des signaux de référence sur la ressource temps-fréquence sélectionnée parmi les M unités de domaine de fréquence et les unités de domaine temporel correspondantes.

7. Procédé selon la revendication 2, le procédé comprenant en outre :
la réception, par le dispositif terminal, d'un troisième message envoyé par un dispositif de réseau, le troisième message étant en outre utilisé pour indiquer au moins l'un des éléments parmi :
un motif de signal de référence est activé sur une première unité de domaine de fréquence ;
une quantité de motifs de signal de référence disponibles dans un système ;
des positions et/ou une densité de signaux de référence compris dans des motifs de signal de référence disponibles dans un système ; et
des informations d'un motif de signal de référence correspondant à la première unité de domaine de fréquence.

8. Procédé selon l'une quelconque des revendications 2 à 7, le procédé comprenant en outre :
l'envoi, par le dispositif terminal, d'une première demande de modification à un dispositif de réseau, la première demande de modification étant utilisée pour modifier un motif de signal de référence correspondant à une première unité de domaine de fréquence.

9. Procédé selon la revendication 8, la première demande de modification étant utilisée pour indiquer au moins l'un des éléments parmi :
l'augmentation ou la diminution de la densité des signaux de référence du motif de signal de référence correspondant à la première unité de domaine de fréquence ;
une densité et/ou des positions de signaux de référence d'un motif de signal de référence modifié correspondant à la première unité de domaine de fréquence ;
des informations d'un motif de signal de référence modifié correspondant à la première unité de domaine de fréquence ;
des informations d'un motif de signal de référence supplémentaire dont l'ajout est demandé.

10. Procédé selon la revendication 2, le procédé comprenant en outre :
la réception, par le dispositif terminal, d'un quatrième message envoyé par un dispositif de réseau, le quatrième message étant utilisé pour indiquer au moins l'un des éléments parmi :
une quantité de motifs de signal de référence disponibles dans un système ;
des positions et/ou une densité de signaux de référence compris dans des motifs de signal de référence disponibles dans un système ;
une relation correspondante entre des motifs de signal de référence disponibles dans un système et des unités de domaine de fréquence disponibles dans le système ;
des informations d'un motif de signal de référence correspondant à une seconde unité de domaine de fréquence ;
des informations d'un second motif de signal de référence supplémentaire ; et
des informations d'un premier motif de signal de référence.

11. Procédé selon la revendication 10, le procédé comprenant en outre :
l'envoi, par le dispositif terminal, d'une seconde demande de modification au dispositif de réseau, la seconde demande de modification étant utilisée pour modifier le motif de signal de référence correspondant à la seconde unité de domaine de fréquence.

12. Procédé selon la revendication 11, la seconde demande de modification étant utilisée pour indiquer au moins l'un des éléments parmi :
l'augmentation ou la diminution de la densité des signaux de référence du motif de signal de référence correspondant à la seconde unité de domaine de fréquence ;
une densité et/ou des positions de signaux de référence du motif de signal de référence modifié correspondant à la seconde unité de domaine de fréquence ;
des informations d'un motif de signal de référence modifié correspondant à la seconde unité de domaine de fréquence ;
des informations d'un motif de signal de référence supplémentaire dont l'ajout ou le remplacement est demandé.

13. Dispositif de réseau (400) comprenant une unité de traitement (410) et une unité d'émission-réception (420) ;
l'unité de traitement (410) étant utilisée pour déterminer N unités de domaine de fréquence pour envoyer des signaux de référence et un motif de signal de référence de chaque unité de domaine de fréquence dans les N unités de domaine de fréquence, N étant un nombre entier supérieur ou égal à 1, et une taille de chaque unité de domaine de fréquence étant égale à une taille de domaine de fréquence occupée par une certaine quantité de blocs de ressources physiques, PRB ; et
**caractérisé en ce que**,
l'unité d'émission-réception (420) est utilisée pour envoyer les signaux de référence sur chacune des unités de domaine de fréquence en fonction du motif de signal de référence ; envoyer un message à un dispositif terminal, le message étant utilisé pour indiquer que des unités de domaine de fréquence pour envoyer les signaux de référence sont M unités de domaine de fréquence, ou utilisé pour indiquer M-N unités de domaine de fréquence nouvellement ajoutées pour envoyer les signaux de référence dans les M unités de domaine de fréquence en plus des N unités de domaine de fréquence, M étant un entier supérieur à N.

14. Dispositif terminal (400) comprenant une unité de traitement (410) et une unité d'émission-réception (420) ;
l'unité de traitement (410) étant utilisée pour déterminer N unités de domaine de fréquence pour recevoir des signaux de référence et un motif de signal de référence de chaque unité de domaine de fréquence dans les N unités de domaine de fréquence, N étant un nombre entier supérieur ou égal à 1, et une taille de chaque unité de domaine de fréquence étant égale à une taille de domaine de fréquence occupée par une certaine quantité de blocs de ressources physiques, PRB ; et
sélectionner une ressource temps-fréquence pour recevoir les signaux de référence provenant des N unités de domaine de fréquence et des unités de domaine temporel correspondant aux N unités de domaine de fréquence ;
**caractérisé en ce que**,
l'unité d'émission-réception (420) est utilisée pour recevoir les signaux de référence sur la ressource temps-fréquence sélectionnée ; recevoir un message envoyé par un dispositif de réseau, le message étant utilisé pour indiquer que les unités de domaine de fréquence pour envoyer les signaux de référence sont M unités de domaine de fréquence, ou utilisé pour indiquer M-N unités de domaine de fréquence nouvellement ajoutées pour envoyer les signaux de référence dans les M unités de domaine de fréquence en plus des N unités de domaine de fréquence, M étant un nombre entier supérieur à N.

15. Dispositif terminal selon la revendication 14, une division des unités de domaine de fréquence étant réalisée sur toutes ou une partie des sous-bandes d'un système, et une unité de domaine de fréquence comprenant une ou plusieurs sous-bandes, la ressource temps-fréquence sélectionnée comprenant toutes les sous-bandes pour recevoir les signaux de référence dans les N unités de domaine de fréquence dans le domaine de fréquence.

16. Dispositif terminal selon la revendication 14, une division des unités de domaine de fréquence étant réalisée sur toutes ou une partie des sous-bandes d'un système, et une unité de domaine de fréquence comprenant une ou plusieurs sous-bandes, la ressource temps-fréquence sélectionnée comprenant une partie des sous-bandes pour recevoir les signaux de référence dans au moins une unité de domaine de fréquence des N unités de domaine de fréquence dans le domaine de fréquence.

17. Dispositif terminal selon l'une quelconque des revendications 14 à 16, l'unité d'émission-réception (420) étant en outre utilisée pour recevoir un premier message envoyé par un dispositif de réseau, le premier message étant utilisé pour indiquer au moins l'un parmi :
une quantité d'unités de domaine de fréquence dans un système ;
une sous-bande occupée par chaque unité de domaine de fréquence ;
une quantité N des unités de domaine de fréquence ; et
une sous-bande occupée par chaque unité de domaine de fréquence ;
l'unité de traitement (410) étant en outre utilisée pour :
la détermination des N unités de domaine de fréquence en fonction du premier message, ou en fonction du premier message et des informations préconfigurées.

18. Dispositif terminal selon l'une quelconque des revendications 14 à 17, l'unité d'émission-réception (420) étant en outre utilisée pour recevoir un deuxième message envoyé par un dispositif de réseau, le deuxième message étant utilisé pour indiquer que des unités de domaine de fréquence pour l'envoi des signaux de référence sont M unités de domaine de fréquence, ou utilisé pour indiquer des unités de domaine de fréquence sur lesquelles l'envoi des signaux de référence est arrêté dans les N unités de domaine de fréquence ;
l'unité de traitement (410) étant en outre utilisée pour sélectionner une ressource temps-fréquence pour recevoir les signaux de référence à partir des M unités de domaine de fréquence et des unités de domaine de temps correspondant aux M unités de domaine de fréquence ;
l'unité d'émission-réception (420) étant en outre utilisée pour recevoir les signaux de référence sur la ressource temps-fréquence sélectionnée parmi les M unités de domaine de fréquence et les unités de domaine de temps correspondantes.

19. Dispositif terminal selon la revendication 14, l'unité d'émission-réception (420) étant en outre utilisée pour :
recevoir un troisième message envoyé par un dispositif de réseau ; le troisième message étant en outre utilisé pour indiquer au moins l'un des éléments parmi :
un motif de signal de référence est activé sur la première unité de domaine de fréquence ;
une quantité de motifs de signal de référence disponibles dans un système ;
des positions et/ou une densité des signaux de référence compris dans des motifs de signal de référence disponibles dans un système ; et
des informations d'un motif de signal de référence correspondant à la première unité de domaine de fréquence.

20. Dispositif terminal selon l'une quelconque des revendications 14 à 19, l'unité d'émission-réception (420) étant en outre utilisée pour :
envoyer une première demande de modification à un dispositif de réseau, la première demande de modification étant utilisée pour modifier un motif de signal de référence correspondant à une première unité de domaine de fréquence.

21. Dispositif terminal selon la revendication 20, la première demande de modification étant utilisée pour indiquer au moins l'un des éléments parmi :
l'augmentation ou la diminution de la densité des signaux de référence du motif de signal de référence correspondant à la première unité de domaine de fréquence ;
une densité et/ou des positions de signaux de référence d'un motif de signal de référence modifié correspondant à la première unité de domaine de fréquence ;
des informations d'un motif de signal de référence modifié correspondant à la première unité de domaine de fréquence ;
des informations d'un motif de signal de référence supplémentaire dont l'ajout est demandé.

22. Dispositif terminal selon l'une quelconque des revendications 14 à 19, l'unité d'émission-réception (420) étant en outre utilisée pour recevoir un quatrième message envoyé par un dispositif de réseau, le quatrième message étant utilisé pour indiquer au moins l'un parmi :
une quantité de motifs de signal de référence disponibles dans un système ;
des positions et/ou une densité de signaux de référence compris dans des motifs de signal de référence disponibles dans un système ;
une relation correspondante entre des motifs de signal de référence disponibles dans le système et des unités de domaine de fréquence disponibles dans le système ;
des informations d'un motif de signal de référence correspondant à une seconde unité de domaine de fréquence ;
des informations d'un second motif de signal de référence supplémentaire ; et
des informations d'un premier motif de signal de référence.

23. Dispositif terminal selon la revendication 22, l'unité d'émission-réception (420) étant en outre utilisée pour :
envoyer, par le dispositif terminal, une seconde demande de modification au dispositif de réseau, la seconde demande de modification étant utilisée pour modifier le motif de signal de référence correspondant à la seconde unité de domaine de fréquence.

24. Dispositif terminal selon la revendication 23, la seconde demande de modification étant utilisée pour indiquer au moins l'un des éléments parmi :
l'augmentation ou la diminution de la densité des signaux de référence du motif de signal de référence correspondant à la seconde unité de domaine de fréquence ;
une densité et/ou des positions de signaux de référence du motif de signal de référence modifié correspondant à la seconde unité de domaine de fréquence ;
des informations d'un motif de signal de référence modifié correspondant à la seconde unité de domaine de fréquence ;
des informations d'un motif de signal de référence supplémentaire dont l'ajout ou le remplacement est demandé.
